# EUROPÄISCHE PATENTSCHRIFT

(11) **EP 1 080 838 B1**
(45) Veröffentlichungstag und Bekanntmachung des Hinweises auf die Patenterteilung: **30.03.2005**
(21) Anmeldenummer: 00115534.0
(22) Anmeldetag: 19.07.2000
(51) Int. Cl.: B24B 23/04, B25F 5/02, B25F 5/00, H02K 5/173, F16C 35/077

(54) **Handwerkzeugmaschine**
Portable power tool
Outil portatif motorisé

(30) Priorität: 20.08.1999 DE 19939171
(43) Veröffentlichungstag der Anmeldung: 07.03.2001
(73) Patentinhaber: ROBERT BOSCH GMBH, 70442 Stuttgart (DE)
(72) Erfinder: Kraenzler, Ernst, 70771 Leinfelden-Echterdingen (DE); Berner, Gerd, 70599 Stuttgart (DE); Renner, Monika, 70771 Leinfelden-Echterdingen (DE); Mueller, Joachim, 70597 Stuttgart (DE)

(56) Entgegenhaltungen:
- DE-A- 2 104 452
- DE-A- 2 400 902
- DE-A- 4 003 031
- DE-A- 19 547 332
- DE-U- 8 624 918
- US-A- 3 095 248

## Beschreibung

### Stand der Technik

Die Erfindung geht aus von einer Handwerkzeugmaschine nach dem Oberbegriff des Anspruchs 1 bzw. des Anspruchs 10.

Aus der DE 86 24 918 U ist eine derartige Handwerkzeugmaschine mit einer in einem Lager gelagerte Antriebswelle bekannt, wobei das Lager sowohl über einen Kunststoffring als auch direkt in einem Getriebegehäuse abgestützt ist.

Durch die DE 195 47 332 A1 ist eine ferner Handwerkzeugmaschine bekannt, deren zylindrisches Gehäuse aus zwei Kunststoffgehäuseschalen besteht, deren Ränder je eine Teilungskante bilden, die eine waagrechte Teilungsebene definieren. Die Gehäuseschalen sind durch Schrauben miteinander verbunden. Im inneren des Gehäuses ist ein Elektromotor mit einem Lüfterrad angeordnet, dessen Antriebswelle an seinen Enden über jeweils ein Kugellager in den Gehäuseschalen gelagert und mit einem kegeligen Ritzel drehfest verbunden ist. Das Ritzel kämmt mit einem von einer Abtriebswelle drehfest getragenen kegeligen Tellerrad, dessen Drehachse rechtwinklig zur Antriebswelle verläuft.

Die Abtriebswelle besitzt eine werkzeugferne Lagerstelle, die ein ringartiges Gleitlager aufweist, das in eine zylindrische Lageraufnahme einer Gehäuseschale eingesetzt ist. Ferner besitzt die Abtriebswelle eine werkzeugnahe Lagerstelle, die eine hülsenartige Lagerbuchse mit einem Nadellager aufweist.

Ein vom werkzeugnahen Ende der Abtriebswelle getragener Exzenterzapfen ragt durch die Lagerbuchse von oben in eine Bohrung eines pleuelartigen Mitnehmers, der mit einem Vorsprung in eine Ausnehmung eines Einsatzwerkzeugs greift, das über ein Führungslager im vorderen Bereich der Gehäuseschalen gelagert ist.

### Vorteile der Erfindung

Die Erfindung geht aus von einer Handwerkzeugmaschine mit einem in einem Gehäuse angeordneten Motor, der eine Antriebswelle aufweist, die an ihren Enden über jeweils ein Lager in zumindest einem Bauteil abgestützt und über ein Mitnahmeelement mit einem Einsatzwerkzeug wirkungsmäßig verbunden ist, wobei zumindest ein Lager der Antriebswelle über einen Teil seiner Länge in radialer Richtung über einen Schiebesitz direkt am Bauteil und über einen Teil seiner Länge in radialer Richtung über einen Kunststoffring am Bauteil abgestützt ist.

Es wird in einer ersten Ausgestaltung der Erfindung vorgeschlagen, daß der Kunststoffring und das Bauteil über zumindest einen sich in radialer Richtung erstreckenden, in eine Ausnehmung greifenden Bund zumindest entgegen seiner Montagerichtung formschlüssig verbunden sind.

Die Antriebswelle ist durch den Schiebesitz sicher fixiert und kann zudem vorteilhaft über den Gummiring in ihrer Lagerstelle gedämpft bzw. können Schwingungen und Stöße von dem Gummiring kompensiert werden. Ferner kann ein Außenring des Lagers durch den Kunststoffring bzw. Gummiring, der Toleranzen des Schiebesitzes ausgleichen kann, über eine Klemmung radial und drehfest fixiert werden.

Zweckmäßigerweise ist das Lager der Antriebswelle über ca. 1/3 seiner Länge im Schiebesitz direkt am Bauteil und über ca. 2/3 seiner Länge über den Kunststoffring bzw. über einen Gummiring am Bauteil abgestützt.

Der Kunststoffring ist erfindungsgemäß mit dem Bauteil zumindest entgegen seiner Montagerichtung formschlüssig verbunden, und zwar besonders vorteilhaft über den gesamten Umfang, wobei der Bund am Kunststoffring und/oder am Bauteil angeordnet sein kann. Der Kunststoffring ist durch einen Formschluß besonders einfach, kostengünstig, ohne zusätzliche Bauteile sicher mit dem Bauteil verbindbar. Insbesondere bei Handwerkzeugmaschinen, die stoßartige Bewegungen ausführen, wie beispielsweise bei sogenannten Schabern usw., kann sicher vermieden werden, daß sich der Kunststoffring in axialer Richtung aus dem Bauteil verschiebt und dadurch die Lagerung beeinträchtigt.

Das Lager wird in axialer Richtung vorteilhaft über ein Gehäuseteil fixiert, wodurch zusätzliche Bauteile, Bauraum, Montageaufwand und Kosten eingespart werden können. Halteelemente können einfach und kostengünstig an Schraubendome des Gehäuses angeformt werden, die häufig in das Innere des Gehäuses ragen. Bei der Gestaltung der Halterippen kann vorteilhaft darauf geachtet werden, daß ein Kühlluftstrom durch die Handwerkzeugmaschine strömen kann. Durch den Formschluß des Kunststoffrings, kann dieser vorteilhaft sicher fixiert werden, ohne daß sich die Halterippen über den gesamten Umfang des Lagers erstrecken und den Kühlluftstrom beeinträchtigen.

In einer alternativen Ausgestaltung der Erfindung wird vorgeschlagen, daß der Kunststoffring mit dem Bauteil zumindest entgegen seiner Montagerichtung über den gesamten Umfang formschlüssig fixiert ist und der Kunststoffring zumindest einen Außenkonus mit einem in Montagerichtung zunehmenden Durchmesser und das Gehäuseteil einen entsprechenden Innenkonus aufweist. Durch die Konusse kann in axialer Richtung ein gewünschter Formschluß und zudem durch eine axiale Kraft auf den Kunststoffring eine radiale Kraft auf das Lager erreicht werden, wodurch dieses besonders sicher durch den Kunststoffring fixiert wird.

Um zu vermeiden, daß der Kunststoffring verdreht montiert werden kann, ist dieser vorteilhaft in axialer Richtung zu seiner Mittelebene symmetrisch ausgeführt und das Bauteil besitzt eine entsprechend symmetrische Gegenfläche. Dies kann mit einem mittig angeordneten Bund oder vorteilhaft mit einem symmetrischen Doppelkonus erreicht werden.

Besitzt der Doppelkonus in axialer Richtung zu seiner Mittelebene einen zunehmenden Durchmesser, wird der Kunststoffring bei der Montage in axialer Richtung automatisch in radialer Richtung zusammengedrückt, wodurch die Montage vereinfacht werden kann. Der Doppelkonus am Kunststoffring könnte jedoch auch mit einem in axialer Richtung zur Mittelebene abnehmenden Durchmesser ausgeführt sein.

Um zu vermeiden, daß sich der Kunststoffring in dem Bauteil verdreht, kann dieser zudem in Umfangsrichtung formschlüssig mit dem Bauteil verbunden sein, beispielsweise durch sich in axialer Richtung erstreckende Vorsprünge.

Das Bauteil kann von einem zusätzlichen, die Lagerkräfte aufnehmenden Bauteil gebildet sein, das direkt oder indirekt im Gehäuse abgestützt ist. Vorteilhaft wird jedoch das Bauteil von einem Gehäuseteil gebildet, wodurch zusätzliche Bauteile und Montageaufwand eingespart werden können. Das Lager der Antriebswelle ist vorteilhaft in einer topfförmigen Ausnehmung angeordnet. Unterschiedliche Wärmeausdehnungen durch unterschiedliche Materialien können vermieden und ein dadurch bedingtes Verkippen der Antriebswelle kann verhindert werden.

Die erfindungsgemäße Lösung kann bei verschiedenen, dem Fachmann als sinnvoll erscheinenden Handwerkzeugmaschinen eingesetzt werden, beispielsweise bei Bohrer, Winkelschleifer usw. und besonders vorteilhaft bei Handwerkzeugmaschinen, die stoßartige Bewegungen ausführen, wie Schaber, Schlagbohrer, Schlagschrauber usw.

### Zeichnung

Weitere Vorteile ergeben sich aus der folgenden Zeichnungsbeschreibung. In der Zeichnung sind Ausführungsbeispiele der Erfindung dargestellt.

Es zeigen:
- Fig. 1: einen Längsschnitt durch eine erfindungsgemäße Handwerkzeugmaschine,
- Fig. 2: eine geöffnete Handwerkzeugmaschine nach Fig. 1 von unten,
- Fig. 3: einen vergrößerten Ausschnitt III aus Fig. 1 mit einem montierten Einsatzwerkzeug,
- Fig. 4: einen Ausschnitt des vorderen Bereichs einer Handwerkzeugmaschine nach Fig. 1 vor der Montage einer oberen Gehäuseschale,
- Fig. 5: einen Ausschnitt des vorderen Bereichs nach Fig. 4 nach der Montage der oberen Gehäuseschale,
- Fig. 6: ein Getriebegehäuse schräg von unten,
- Fig. 7: einen Schnitt durch eine Hülse bei der Montage,
- Fig. 8: ein Führungslager schräg von oben,
- Fig. 9: ein Stellmittel schräg von unten,
- Fig. 10: ein Stellmittel schräg von oben,
- Fig. 11: einen vergrößerten Ausschnitt XI aus Fig. 1,
- Fig. 12: einen Kunststoffring aus Fig. 11 in einer Seitenansicht,
- Fig. 13: eine Variante nach Fig. 11 mit einem gestuften Kunststoffring und
- Fig. 14: eine Variante nach Fig. 11, die einen Kunststoffring mit einem Doppelkonus aufweist.

### Beschreibung der Ausführungsbeispiele

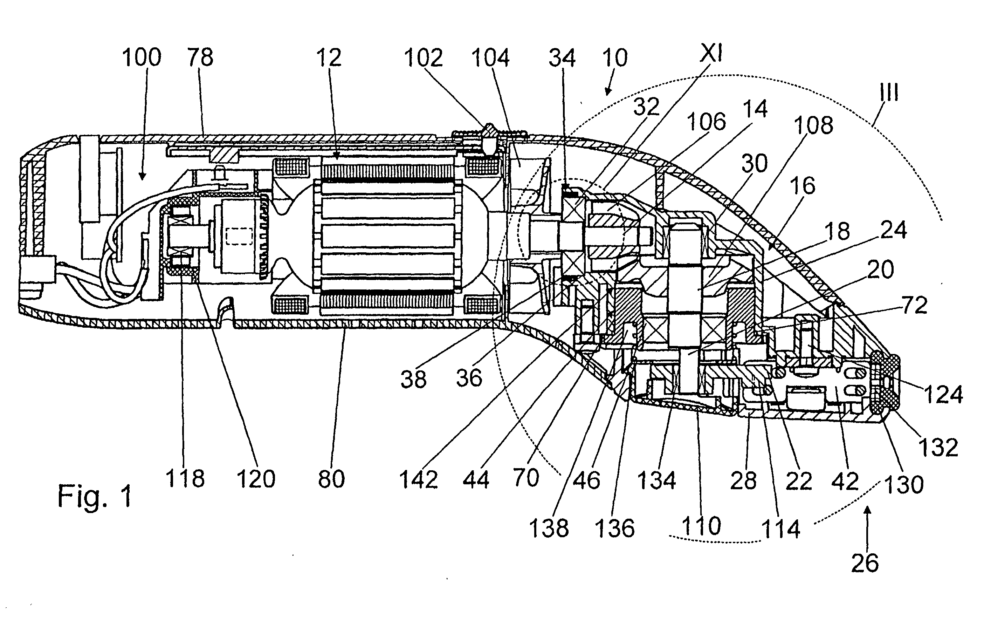

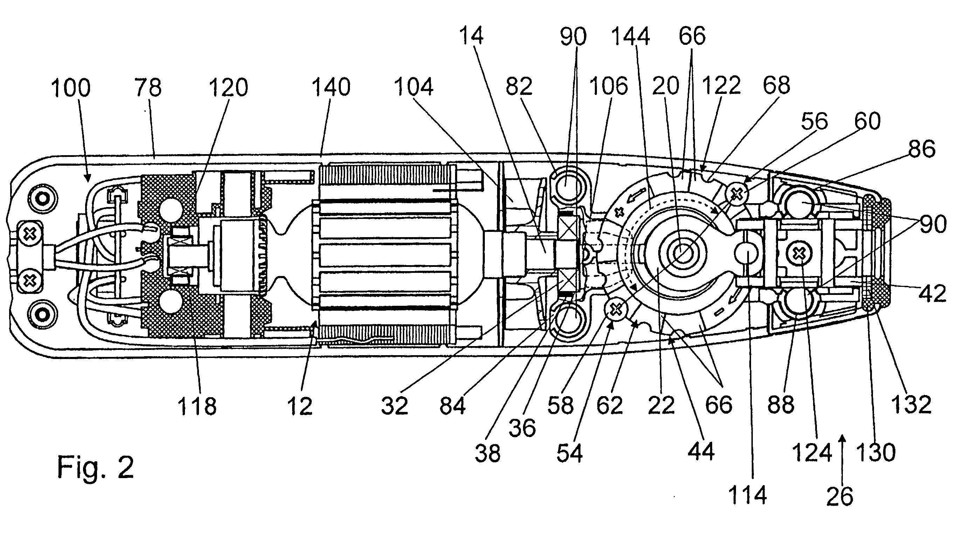

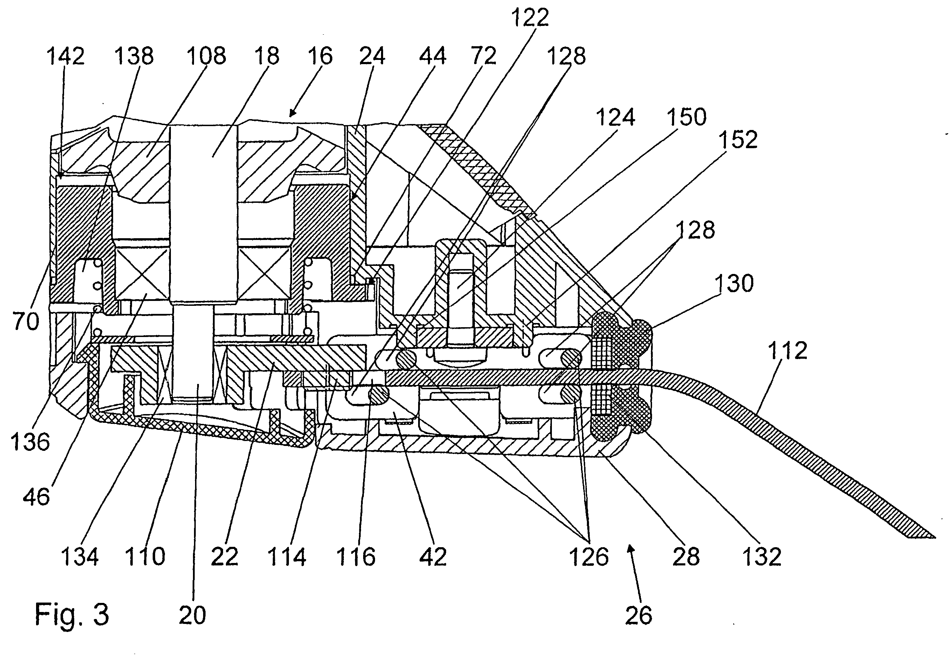

Fig. 1 zeigt einen Längsschnitt durch eine erfindungsgemäße Handwerkzeugmaschine zur schabenden Bearbeitung von Oberflächen, kurz als Schaber bezeichnet. Die Handwerkzeugmaschine besitzt einen in einem Gehäuse 10 angeordneten Motor 12, der über Elektrokabel 100 elektrisch versorgt und über einen Schalter 102 ein- und ausschaltbar ist. Der Elektromotor 12 ist über eine Antriebswelle 14 mit einem Lüfterrad 104 und mit einem Winkelgetriebe 16 wirkungsmäßig verbunden, und zwar ist auf der Antriebswelle 14 ein Ritzel 106 befestigt, das mit einem von einer Abtriebswelle 18 getragenen Tellerrad 108 kämmt, dessen Drehachse rechtwinklig zur Antriebswelle 14 verläuft. Am nach unten weisenden Ende der Abtriebswelle 18 ist ein Exzenterzapfen 20 angeformt, der in ein pleuelartiges Mitnahmeelement 22 und über einen angeformten Bolzen 114 in ein Langloch 116 eines Einsatzwerkzeugs 112 greift (Fig. 2 und 3). Der Exzenterzapfen 20 ist über ein Wälzlager 134 im Mitnahmeelement 22 gelagert. Durch das Langloch 116 erfolgt die Bewegungsübertragung von der Antriebswelle 14 über das Mitnahmeelement 22 auf das Einsatzwerkzeug 112 nur dann, wenn das Einsatzwerkzeug 112 auf eine Arbeitsfläche aufgesetzt und soweit zurück geschoben wird, daß sich der Bolzen 114 am Rand des Langlochs 116 abstützen und so seine hin- und hergehende Bewegung auf das Einsatzwerkzeug 112 übertragen kann. Im Leerlauf steht das Einsatzwerkzeug 112 bei drehender Antriebswelle 14 still, so daß der Verschleiß an den bewegungsübertragenden Teilen verringert wird. Verletzungen im Leerlauf durch ein sich bewegendes Einsatzwerkzeug 112 werden vermieden. Ferner kann das ruhende Einsatzwerkzeug 112 im Leerlauf gezielt an einer gewünschten Stelle auf der zu bearbeitenden Oberfläche aufgesetzt werden.

Das Winkelgetriebe 16 ist in einem separaten Getriebegehäuse 24 aus Aluminiumdruckguß angeordnet, das im vorderen, oberen Bereich 26 einen ersten Teil und mit einem Deckel 28 im vorderen, unteren Bereich 26 einen zweiten Teil des Gehäuses 10 bzw. Außenwände der Handwerkzeugmaschine bildet.

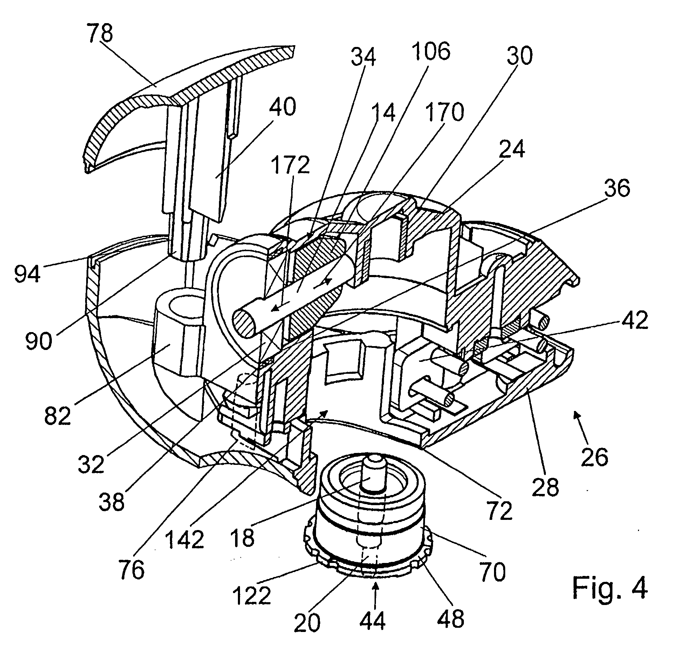

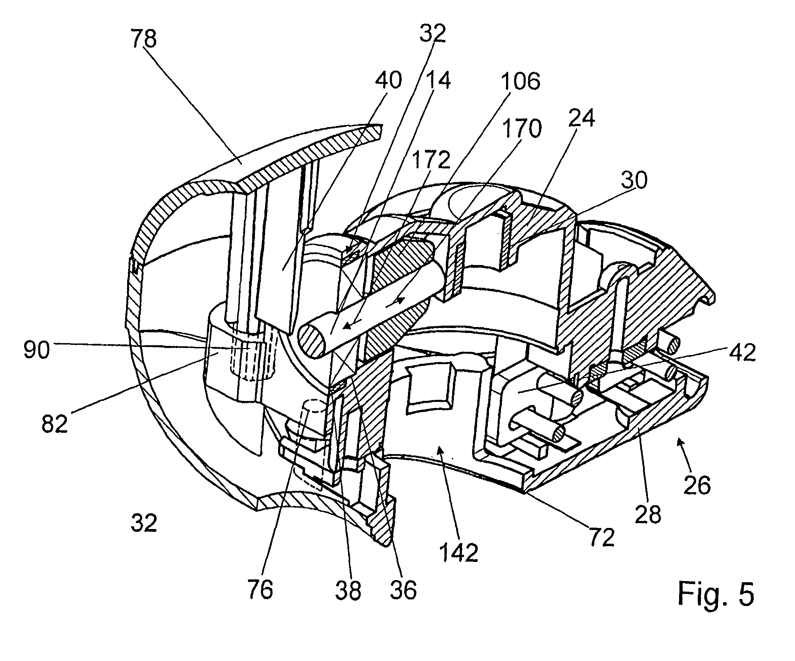

Im Getriebegehäuse 24 sind mehrere Lagerstellen integriert. Die Antriebswelle 14 des Elektromotors 12 ist an einem ersten, dem Einsatzwerkzeug 112 abgewandten Ende über ein Lager 118 und über ein Bauteil 120 in einer ersten oberen Kunststoffgehäuseschale 78 gelagert. Ein zweites, dem Einsatzwerkzeug 112 zugewandtes Ende der Antriebswelle 14 ist über ein Lager 32 in einer topfförmigen Ausnehmung 34 im Getriebegehäuse 24 gelagert. Das Lager 32 ist in radialer Richtung ca. über 1/3 seiner Länge über einen Schiebesitz 36 direkt im Getriebegehäuse 24 und über ca. 2/3 seiner Länge in radialer Richtung über einen Gummiring 38 im Getriebegehäuse 24 abgestützt. In axialer Richtung 172 ist das Lager 32 über eine Halterippe 40 in der topfförmigen Ausnehmung 34 fixiert, die an einen Schraubendom der oberen Gehäuseschale 78 angeformt ist und sich bei der Montage vor die topfförmige Ausnehmung 34 schiebt (Fig. 4 und 5).

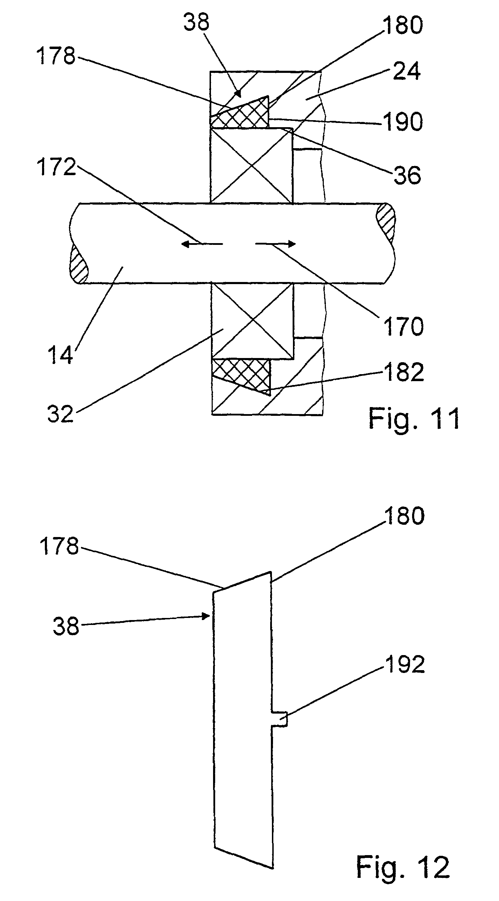

Erfindungsgemäß ist der Kunststoffring 38 mit dem Getriebegehäuse 24 in beide axiale Richtungen 170, 172 formschlüssig verbunden (Fig. 11). Der Kunststoffring 38 ist in seine Montagerichtung 170 über eine Stirnseite 180 an einem Absatz 190 im Getriebegehäuse 24 abgestützt. Ferner besitzt der Kunststoffring 38 einen Außenkonus 178 mit einem in Montagerichtung 170 zunehmenden Durchmesser und das Getriebegehäuse 24 besitzt im Bereich des Kunststoffrings 38 einen entsprechenden Innenkonus 182. Über die Konusse 178, 182 ist der Kunststoffring 38 entgegen seiner Montagerichtung 170 formschlüssig mit dem Getriebegehäuse 24 verbunden. Um zu vermeiden, daß sich der Kunststoffring 38 während des Betriebs verdreht, sind an der in Montagerichtung 170 weisenden Stirnseite 190 sich in axialer Richtung erstreckende Stege 192 angeformt, die in nicht näher dargestellte Ausnehmungen des Getriebegehäuses 24 greifen (Fig. 12). Der Kunststoffring 38 wird zeitlich vor dem Lager 32 montiert und dabei in radialer Richtung zusammengedrückt.

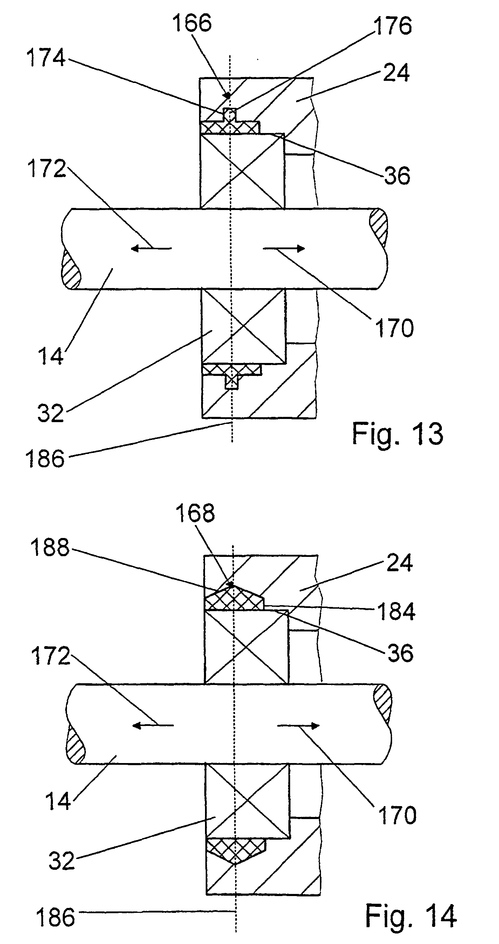

In Fig. 13 ist ein alternativer Kunststoffring 166 mit einem sich in radialer Richtung und über den gesamten Umfang erstreckenden Bund 176 dargestellt. Im wesentlichen gleichbleibende Bauteile sind in den Ausführungsbeispielen grundsätzlich mit den gleichen Bezugszeichen beziffert. Der Bund 176 ist mittig angeordnet, so daß der Kunststoffring 166 zu seiner axialen Mittelebene 186 symmetrisch ist und bei der Montage mit beiden Stirnseiten zuerst in das Getriebegehäuse 24 eingeführt werden kann. Eine Fehlmontage wird vermieden. Der Bund 176 greift in eine Ausnehmung 174 des Getriebegehäuses 24 und fixiert den Kunststoffring 166 in beide axiale Richtungen 170, 172 formschlüssig.

Ein Ausführungsbeispiel in Fig. 14 besitzt einen Kunststoffring 168 mit einem Doppelkonus 188, der mit einem entsprechend ausgeführten Innenkonus 184 im Getriebegehäuse 24 zusammenwirkt und den Kunststoffring 168 in beide axiale Richtungen 170, 172 im Getriebegehäuse 24 formschlüssig fixiert. Der Doppelkonus 188 besitzt zur Mittelebene 186 einen zunehmenden Durchmesser und kann dadurch vor der Montage des Lagers 32 einfach in das Getriebegehäuse 24 eingeschoben werden. Der Kunststoffring 168 wird durch die in Montagerichtung 170 weisende Schräge des Doppelkonus 188 über eine axiale Montagekraft automatisch in radialer Richtung zusammengedrückt. Der Kunststoffring 168 ist zu seiner axialen Mittelebene 186 symmetrisch ausgeführt, wodurch eine Fehlmontage vermieden wird.

Die Abtriebswelle 18 ist an ihrem ersten, dem Einsatzwerkzeug 112 abgewandten Ende mit einem ersten Lager 30 direkt und an ihrem zweiten, dem Einsatzwerkzeug 112 zugewandten Ende mit einem zweiten Lager 46 über eine als Stellmittel 44 ausgebildete Lagerbuchse im Getriebegehäuse 24 gelagert.

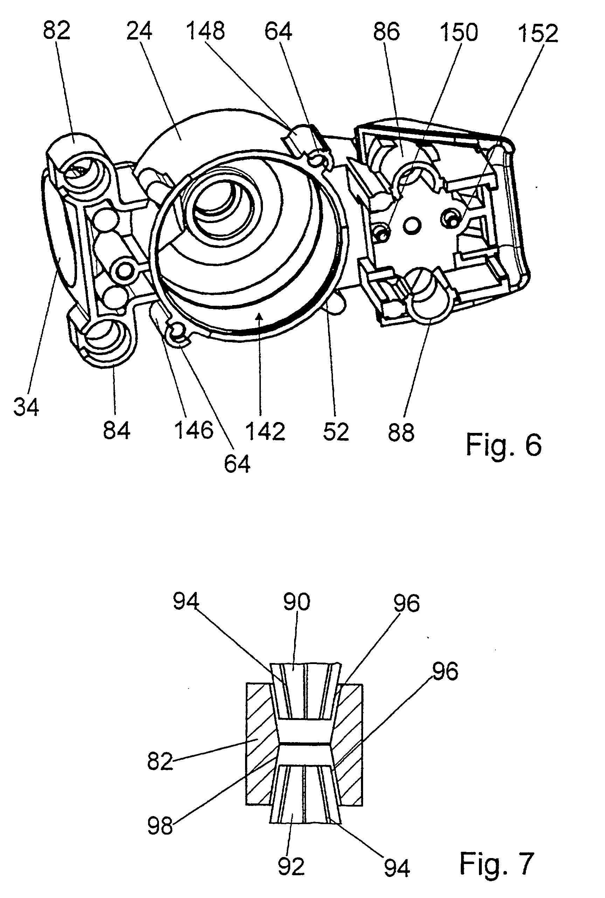

Das Stellmittel 44 ist über eine Lagerfläche 70 in einer zylindrischen Ausnehmung 142 im Getriebegehäuse 24 gelagert (Fig. 1, 4, 5, 6, 9 und 10). An einer dem Einsatzwerkzeug 112 abgewandten axialen Fläche 48 eines angeformten Bundes 122 besitzt das Stellmittel 44 einen Ringkeil 50, dem ein gehäuseseitiger Gegen-Ringkeil 52 als Abstützfläche zugeordnet ist. Der Ringkeil 50 ist über zwei Schrauben 54, 56 gegen den Gegen-Ringkeil 52 gedrückt, die über ihre Schraubenköpfe 58, 60 jeweils auf eine Klemmfläche 62 des Stellmittels 44 und auf Auflageflächen 64 des Getriebegehäuses 24 wirken, die von Stegen gebildet sind. Um eine um 180° verdrehte Montage des Stellmittels 44 zu vermeiden, ist der überstrichene Winkel 144 von der ersten Schraube 54 zur zweiten Schraube 56 bzw. von einem ersten Schraubendom 146 zu einem zweiten Schraubendom 148 ungleich 180° (Fig. 2 und 6).

Die Klemmfläche 62 besitzt in Umfangsrichtung eine Steigung bzw. ein Gefälle und gleicht dadurch einen axialen Verstellweg des Stellmittels 44 aus, so daß die Schraubenköpfe 58, 60 in den Stellpositionen stets auf die Klemmfläche 62 und auf die Auflageflächen 64 wirken. Die Klemmfläche 62 ist von Stufen 66 gebildet, die in den Stellpositionen parallel zu Auflageflächen der Schraubenköpfe 58, 60 verlaufen.

Durch Lösen der Schrauben 54, 56 und durch Verdrehen des Stellmittels 44 kann die Abtriebswelle 18 axial verstellt und dadurch das Getriebespiel eingestellt werden. Um ein ungewünschtes Verdrehen während des Betriebs zu vermeiden, ist an den Bund 122 des Stellmittels 44 eine Verdrehsicherung 68 angeformt, und zwar in der Form von Einbuchtungen, die bei vollständig eingedrehten Schrauben 54, 56, diese in Verstellrichtung formschlüssig umgreifen. Im Bereich des Bundes 122 bleibt nach der Bearbeitung der Lagerfläche 70 ein nicht näher dargestellter Materialvorsprung stehen, der im montierten Zustand des Stellmittels 44 in einen Einstich 72 des Getriebegehäuses 24 ragt. Ferner kann im Bereich der Lagerfläche 70 eine nicht näher dargestellte Nut für eine Dichtung in das Stellmittel 44 und/oder in das Getriebegehäuse 24 eingebracht werden, um eine durch die lange Lagerfläche 70 bereits gute Dichtwirkung weiter zu verbessern und um zu vermeiden, daß Schmierstoffe aus dem Getriebegehäuse 24 nach außen dringen.

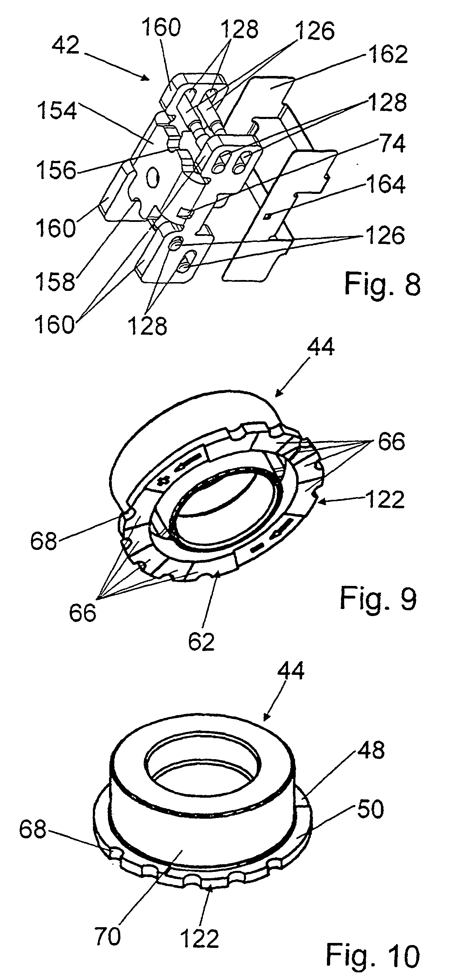

An dem Getriebegehäuse 24 ist zudem im vorderen Bereich 26 ein U-förmiges Führungslager 42 für das Einsatzwerkzeug 112 über eine Schraube 124 befestigt (Fig. 3 und 8). An das Getriebegehäuse 24 angeformte Zapfen 150, 152 greifen im montierten Zustand formschlüssig in Ausnehmungen 156, 158 einer Deckseite 154 des Führungslagers 42 (Fig. 6 und 8). Das in einem Stanz-Biegeverfahren aus einem gehärteten Stahlblech hergestellte Führungslager 42 stützt sich mit Stirnseiten 160 seiner Schenkel am Getriebegehäuse 24 ab. Das Führungslager 42 ist dadurch sicher form- und kraftschlüssig mit dem Getriebegehäuse 24 verbunden und eine Nachbearbeitung der Lagerflächen bzw. Auflageflächen 160 des Führungslagers 42 nach dem Stanz-Biegeverfahren kann vermieden werden. Zwischen den Schenkeln des U-förmigen Führungslagers 42 ist zudem das Mitnahmeelement 22 verdrehsicher geführt (Fig. 2).

Das Einsatzwerkzeug 112 ist im Führungslager 42 verschleißarm durch vier als Nadeln ausgestaltete Wälzkörper 126 in Längsrichtung verschiebbar gelagert, die in Langlöchern 128 geführt und über ein Halteblech 162 bereits vor der Montage des Führungslagers 42 am Getriebegehäuse 24 verliersicher gehalten sind. Das Halteblech 162 ist in das U-förmige Führungslager 42 mit angeformten Vorsprüngen 164 in Ausnehmungen 74 einrastbar.

In Richtung Arbeitsbereich ist die Handwerkzeugmaschine über eine Schutzkappe 130 mit einer Filzdichtung 132 abgedichtet. Die Schutzkappe 130 ist zwischen dem Getriebegehäuse 24 und dem Deckel 28 formschlüssig eingelegt, und zwar greifen das Getriebegehäuse 24 und der Deckel 28 zwischen zwei umlaufende Wülste der Schutzkappe 130. Die Schutzkappe 130 ist dadurch besonders einfach zu montieren und besonders abreißsicher mit der Handwerkzeugmaschine verbunden. Das Einsatzwerkzeug 112 ragt durch die Schutzkappe 130 nach außen. Die Schutzkappe 130 ist vor Verschleiß bzw. vor Abrieb auf der zu bearbeitenden Oberfläche durch den Deckel 28 und durch das Getriebegehäuse 24 geschützt.

Zum Auswechseln des Einsatzwerkzeugs 112 kann das Mitnahmeelement 22 über die Drucktaste 110 entlang des Exzenterzapfens 20 entgegen einer Druckfeder 136 verschoben werden, die sich in einer Einbuchtung 138 am Stellmittel 44 abstützt. Der Bolzen 114 verschiebt sich aus dem Langloch 116 des Einsatzwerkzeugs 112, wodurch dieses ohne Werkzeuge entfernt und ein alternatives Einsatzwerkzeug eingesetzt werden kann.

Das Gehäuse 10 besitzt neben der ersten oberen Gehäuseschale 78 eine zweite untere Kunststoffgehäuseschale 80, die in einer waagerechten Arbeitsstellung in einer waagerechten Teilungsebene 140 zusammengefügt sind (Fig. 2). An das Getriebegehäuse 24 sind vier Hülsen 82, 84, 86, 88 angeformt, in die von oben vier Zapfen 90 der oberen Gehäuseschale 78 kraftund formschlüssig eingesteckt sind (Fig. 2, 6 und 7). Ferner werden von unten in die zwei, dem Einsatzwerkzeug 112 abgewandten Hülsen 82, 84 zwei Zapfen 92 von der unteren Gehäuseschale 80 und in die zwei, dem Einsatzwerkzeug 112 zugewandten Hülsen 86, 88 zwei Zapfen des Deckels 28 form- und kraftschlüssig eingesteckt. Die Zapfen 90, 92 der Gehäuseschalen 78, 80 und die Zapfen des Deckels 28 werden von Schraubendomen gebildet, über die die Gehäuseschalen 78, 80, der Deckel 28 und das Getriebegehäuse 24 über nicht näher dargestellte Schrauben miteinander verschraubt sind. Die Gehäuseschale 80 greift zudem über zwei an Angußstellen gebildeten Zapfen 76 formschlüssig in zwei nicht näher dargestellte Öffnungen des Deckels 28.

Um eine spanende Nachbearbeitung zu vermeiden und den Kraftschluß zu erhöhen, sind die Hülsen 82, 84, 86, 88 jeweils mit einem Doppelinnenkonus 98 ausgeführt, in den die Zapfen 90, 92 der Gehäuseschalen 78, 80 und die Zapfen des Deckels 28 mit entsprechend geformten Gegen-Außenkonusse 96 gesteckt sind. Ferner sind an die Zapfen 90, 92 Quetschrippen 94 angeformt, wodurch sich die Zapfen 90, 92 an die Hülsen 82, 84, 86, 88 anpassen können und ein besonders vorteilhafter Kraftund Formschluß erreicht werden kann.

### Bezugszeichen

- 10: Gehäuse
- 12: Motor
- 14: Antriebswelle
- 16: Winkelgetriebe
- 18: Abtriebswelle
- 20: Exzenter
- 22: Mitnahmeelement
- 24: Getriebegehäuse
- 26: Bereich
- 28: Deckel
- 30: Lager
- 32: Lager
- 34: Ausnehmung
- 36: Schiebesitz
- 38: Kunststoffring
- 40: Gehäuseteil
- 42: Führungslager
- 44: Stellmittel
- 46: Lager
- 48: Fläche
- 50: Ringkeil
- 52: Gegen-Ringkeil
- 54: Schraube
- 56: Schraube
- 58: Schraubenkopf
- 60: Schraubenkopf
- 62: Klemmfläche
- 64: Auflagefläche
- 66: Stufe
- 68: Verdrehsicherung
- 70: Lagerfläche
- 72: Einstich
- 74: Ausnehmung
- 76: Zapfen
- 78: Gehäuseschale
- 80: Gehäuseschale
- 82: Hülse
- 84: Hülse
- 86: Hülse
- 88: Hülse
- 90: Zapfen
- 92: Zapfen
- 94: Quetschrippe
- 96: Außenkonus
- 98: Gegen-Doppelinnenkonus
- 100: Elektrokabel
- 102: Schalter
- 104: Lüfterrad
- 106: Ritzel
- 108: Tellerrad
- 110: Drucktaste
- 112: Einsatzwerkzeug
- 114: Bolzen
- 116: Langloch
- 118: Lager
- 120: Bauteil
- 122: Bund
- 124: Schraube
- 126: Wälzkörper
- 128: Loch
- 130: Schutzkappe
- 132: Filzdichtung
- 134: Wälzlager
- 136: Druckfeder
- 138: Einbuchtung
- 140: Teilungsebene
- 142: Ausnehmung
- 144: Winkel
- 146: Schraubendom
- 148: Schraubendom
- 150: Teil
- 152: Teil
- 154: Teil
- 156: Ausnehmung
- 158: Ausnehmung
- 160: Stirnseite
- 162: Halteblech
- 164: Vorsprung
- 166: Kunststoffring
- 168: Kunststoffring
- 170: Richtung
- 172: Richtung
- 174: Ausnehmung
- 176: Bund
- 178: Konus
- 180: Stirnseite
- 182: Innenkonus
- 184: Innenkonus
- 186: Mittelebene
- 188: Doppelkonus
- 190: Absatz
- 192: Steg

## Patentansprüche

1. Handwerkzeugmaschine mit einem in einem Gehäuse (10) angeordneten Motor (12), der eine Antriebswelle (14) aufweist, die an ihren Enden über jeweils ein Lager (32, 118) in zumindest einem Bauteil (24, 120) abgestützt und über ein Mitnahmeelement (22) mit einem Einsatzwerkzeug (112) wirkungsmäßig verbunden ist, wobei zumindest ein Lager (32) der Antriebswelle (14) über einen Teil seiner Länge in radialer Richtung über einen Schiebesitz (36) direkt am Bauteil (24) und über einen Teil seiner Länge in radialer Richtung über einen Kunststoffring (38, 166) am Bauteil (24) abgestützt ist, **dadurch gekennzeichnet, daß** der Kunststoffring (166) und das Bauteil (24) über zumindest einen sich in radialer Richtung erstreckenden, in eine Ausnehmung (174) greifenden Bund (176) zumindest entgegen seiner Montagerichtung (170) formschlüssig verbunden sind.

2. Handwerkzeugmaschine nach Anspruch 1, **dadurch gekennzeichnet, daß** der Kunststoffring (166) über den gesamten Umfang formschlüssig fixiert ist.

3. Handwerkzeugmaschine nach einem der vorhergehenden Ansprüche, **dadurch gekennzeichnet, daß** der Kunststoffring (166) zu seiner axialen Mittelebene (186) symmetrisch ausgeführt ist.

4. Handwerkzeugmaschine nach einem der vorhergehenden Ansprüche, **dadurch gekennzeichnet, daß** der Kunststoffring (166) in Umfangsrichtung formschlüssig mit dem Bauteil (24) verbunden ist.

5. Handwerkzeugmaschine nach einem der vorhergehenden Ansprüche, **dadurch gekennzeichnet, daß** das Bauteil (24) von einem Getriebegehäuse gebildet ist.

6. Handwerkzeugmaschine nach einem der vorhergehenden Ansprüche, **dadurch gekennzeichnet, daß** das Lager (32) der Antriebswelle (14) in eine topfförmige Ausnehmung (34) im Getriebegehäuse (24) eingesetzt ist.

7. Handwerkzeugmaschine nach Anspruch 5 oder 6, **dadurch gekennzeichnet, daß** das Getriebegehäuse (24) aus Metall ist.

8. Handwerkzeugmaschine nach einem der Ansprüche 5 bis 7, **dadurch gekennzeichnet, daß** das Getriebegehäuse (24) im vorderen Bereich (26) zumindest einen Teil des Gehäuses (10) bildet.

9. Handwerkzeugmaschine nach einem der vorhergehenden Ansprüche, **dadurch gekennzeichnet, daß** das Lager (32) der Antriebswelle (14) in zumindest einer axialen Richtung (172) über ein Gehäuseteil (40) fixiert ist.

10. Handwerkzeugmaschine mit einem in einem Gehäuse (10) angeordneten Motor (12), der eine Antriebswelle (14) aufweist, die an ihren Enden über jeweils ein Lager (32, 118) in zumindest einem Bauteil (24, 120) abgestützt und über ein Mitnahmeelement (22) mit einem Einsatzwerkzeug (112) wirkungsmäßig verbunden ist, wobei zumindest ein Lager (32) der Antriebswelle (14) über einen Teil seiner Länge in radialer Richtung über einen Schiebesitz (36) direkt am Bauteil (24) und über einen Teil seiner Länge in radialer Richtung über einen Kunststoffring (38, 168) am Bauteil (24) abgestützt ist, **dadurch gekennzeichnet, dass** der Kunststoffring (38, 168) mit dem Bauteil (24) zumindest entgegen seiner Montagerichtung (170) über den gesamten Umfang formschlüssig fixiert ist und der Kunststoffring (38, 168) zumindest einen Außenkonus (178) mit einem in Montagerichtung (170) zunehmenden Durchmesser und das Bauteil (24) einen entsprechenden Innenkonus (182) aufweist.

11. Handwerkzeugmaschine nach Anspruch 10, **dadurch gekennzeichnet, daß** der Kunststoffring (168) zu seiner axialen Mittelebene (186) symmetrisch ausgeführt ist.

12. Handwerkzeugmaschine nach Anspruch 11, **dadurch gekennzeichnet, daß** der Kunststoffring (168) zumindest einen Doppelkonus (188) aufweist.

13. Handwerkzeugmaschine nach Anspruch 12, **dadurch gekennzeichnet, daß** der Doppelkonus (188) des Kunststoffrings (168) in axialer Richtung (170, 172) zu seiner Mittelebene (186) einen zunehmenden Durchmesser aufweist.

14. Handwerkzeugmaschine nach einem der Ansprüche 10 bis 13, **dadurch gekennzeichnet, daß** der Kunststoffring (168) in Umfangsrichtung formschlüssig mit dem Bauteil (24) verbunden ist.

15. Handwerkzeugmaschine nach einem der Ansprüche 10 bis 14, **dadurch gekennzeichnet, daß** das Bauteil (24) von einem Getriebegehäuse gebildet ist.

16. Handwerkzeugmaschine nach einem der Ansprüche 10 bis 15, **dadurch gekennzeichnet, daß** das Lager (32) der Antriebswelle (14) in eine topfförmige Ausnehmung (34) im Getriebegehäuse (24) eingesetzt ist.

17. Handwerkzeugmaschine nach Anspruch 15 oder 16, **dadurch gekennzeichnet, daß** das Getriebegehäuse (24) aus Metall ist.

18. Handwerkzeugmaschine nach einem der Ansprüche 15 bis 17, **dadurch gekennzeichnet, daß** das Getriebegehäuse (24) im vorderen Bereich (26) zumindest einen Teil des Gehäuses (10) bildet.

19. Handwerkzeugmaschine nach einem der Ansprüche 10 bis 18, **dadurch gekennzeichnet, daß** das Lager (32) der Antriebswelle (14) in zumindest einer axialen Richtung (172) über ein Gehäuseteil (40) fixiert ist.

## Claims

1. Powered hand tool having a motor (12) which is arranged in a housing (10) and has a drive shaft (14) which is supported at its ends in at least one component (24, 120) via a respective bearing (32, 118) and is operatively connected to an insert tool (112) via a driving element (22), at least one bearing (32) of the drive shaft (14) being supported over part of its length directly on the component (24) in the radial direction via a sliding fit (36) and being supported over part of its length on the component (24) in the radial direction via a plastic ring (38, 166), **characterized in that** the plastic ring (166) and the component (24) are connected in a positive-locking manner, at least against the fitting direction (170) of said plastic ring (166), via at least one collar (176) extending in the radial direction and engaging in a recess (174).

2. Powered hand tool according to Claim 1, **characterized in that** the plastic ring (166) is fixed in a positive-locking manner over the entire circumference.

3. Powered hand tool according to either of the preceding claims, **characterized in that** the plastic ring (166) is designed to be symmetrical relative to its axial centre plane (186).

4. Powered hand tool according to one of the preceding claims, **characterized in that** the plastic ring (166) is connected to the component (24) in a positive-locking manner in the circumferential direction.

5. Powered hand tool according to one of the preceding claims, **characterized in that** the component (24) is formed by a gearbox.

6. Powered hand tool according to one of the preceding claims, **characterized in that** the bearing (32) of the drive shaft (14) is inserted into a pot-shaped recess (34) in the gearbox (24).

7. Powered hand tool according to Claim 5 or 6, **characterized in that** the gearbox (24) is made of metal.

8. Powered hand tool according to one of Claims 5 to 7, **characterized in that** the gearbox (24), in the front region (26), forms at least part of the housing (10).

9. Powered hand tool according to one of the preceding claims, **characterized in that** the bearing (32) of the drive shaft (14) is fixed in at least one axial direction (172) via a housing part (40).

10. Powered hand tool having a motor (12) which is arranged in a housing (10) and has a drive shaft (14) which is supported at its ends in at least one component (24, 120) via a respective bearing (32, 118) and is operatively connected to an insert tool (112) via a driving element (22), at least one bearing (32) of the drive shaft (14) being supported over part of its length directly on the component (24) in the radial direction via a sliding fit (36) and being supported over part of its length on the component (24) in the radial direction via a plastic ring (38, 168), **characterized in that** the plastic ring (38, 168) is fixed to the component (24) in a positive-locking manner over the entire circumference, at least against its fitting direction (170), and the plastic ring (38, 168) has at least one external taper (178) having a diameter increasing in the fitting direction (170), and the component (24) has a corresponding internal taper (182).

11. Powered hand tool according to Claim 10, **characterized in that** the plastic ring (168) is designed to be symmetrical relative to its axial centre plane (186).

12. Powered hand tool according to Claim 11, **characterized in that** the plastic ring (168) has at least one double taper (188).

13. Powered hand tool according to Claim 12, **characterized in that** the double taper (188) of the plastic ring (168) has an increasing diameter in the axial direction (170, 172) towards its centre plane (186).

14. Powered hand tool according to one of Claims 10 to 13, **characterized in that** the plastic ring (168) is connected to the component (24) in a positive-locking manner in the circumferential direction.

15. Powered hand tool according to one of Claims 10 to 14, **characterized in that** the component (24) is formed by a gearbox.

16. Powered hand tool according to one of Claims 10 to 15, **characterized in that** the bearing (32) of the drive shaft (14) is inserted into a pot-shaped recess (34) in the gearbox (24).

17. Powered hand tool according to Claim 15 or 16, **characterized in that** the gearbox (24) is made of metal.

18. Powered hand tool according to one of Claims 15 to 17, **characterized in that** the gearbox (24), in the front region (26), forms at least part of the housing (10).

19. Powered hand tool according to one of Claims 10 to 18, **characterized in that** the bearing (32) of the drive shaft (14) is fixed in at least one axial direction (172) via a housing part (40).

## Revendications

1. Outil portatif muni d'un moteur (12) disposé dans un boîtier (10) qui présente un arbre d'entraînement (14), supporté à chacune de ses extrémités par un palier (32, 118) dans au moins composant (24, 120) et est relié activement par un élément d'entraînement (22) à un outil d'insertion (112), au moins un palier (32) de l'arbre d'entraînement (14) étant supporté sur une partie de sa longueur dans la direction radiale par un siège coulissant (36) directement sur le composant (24) et sur une partie de sa longueur dans la direction radiale par une bague en plastique (38, 166) sur le composant (24),
**caractérisé en ce que**
la bague en plastique (166) au moins contre sa direction de montage (170) et le composant (24) sont reliés par complémentarité de forme par au moins une collerette (176) s'engageant dans un évidement (174) et s'étendant dans la direction radiale.

2. Outil portatif selon la revendication 1,
**caractérisé en ce que**
la bague en plastique (166) est fixée par complémentarité de forme sur la totalité de sa périphérie.

3. Outil portatif selon l'une des revendications précédentes,
**caractérisé en ce que**
la bague en plastique (166) est réalisée symétriquement à son plan médian axial (186).

4. Outil portatif selon l'une des revendications précédentes,
**caractérisé en ce que**
la bague en plastique (166) est reliée par complémentarité de forme à le composant (24) dans la direction périphérique.

5. Outil portatif selon l'une des revendications précédentes,
**caractérisé en ce que**
le composant (24) est par une boîte à engrenages.

6. Outil portatif selon l'une des revendications précédentes,
**caractérisé en ce que**
le palier (32) de l'arbre d'entraînement (14) est inséré dans un évidement en forme de coupelle (34) dans la boîte à engrenages (24).

7. Outil portatif selon la revendication 5 ou 6,
**caractérisé en ce que**
la boîte à engrenages (24) est en métal.

8. Outil portatif selon les revendications 5 à 7,
**caractérisé en ce que**
la boîte à engrenages (24) forme dans la région antérieure (26) au moins une partie du boîtier (10).

9. Outil portatif selon l'une des revendications précédentes,
**caractérisé en ce que**
le palier (32) de l'arbre d'entraînement (14) est fixé par une partie de boîtier (40) au moins dans une direction axiale (172).

10. Outil portatif muni d'un moteur (12) disposé dans un boîtier (10) qui présente un arbre d'entraînement (14), supporté à chacune de ses extrémités par un palier (32, 118) dans au moins un composant (24, 120) et est relié activement par un élément d'entraînement (22) à un outil d'insertion (112), au moins un palier (32) de l'arbre d'entraînement (14) étant supporté sur une partie de sa longueur dans la direction radiale par un siège coulissant (36) directement sur le composant (24) et sur une partie de sa longueur dans la direction radiale par une bague en plastique (38, 166) sur le composant (24),
**caractérisé en ce que**
la bague en plastique (38, 168) est fixée par complémentarité de forme avec le composant (24) sur la totalité de sa périphérie au moins contre sa direction de montage (170), et la bague en plastique (38, 168) présente au moins un cône extérieur (178) présentant un diamètre croissant dans la direction de montage (170), le composant (24) ayant un cône intérieur (182) correspondant.

11. Outil portatif selon la revendication 10,
**caractérisé en ce que**
la bague en plastique (168) est réalisée symétriquement à son plan médian axial (186).

12. Outil portatif selon la revendication 11,
**caractérisé en ce que**
la bague en plastique (168) présente au moins un double cône (188).

13. Outil portatif selon la revendication 12,
**caractérisé en ce que**
le double cône (188) de la bague en plastique (168) présente un diamètre croissant dans la direction axiale (170, 172) de son plan médian (186).

14. Outil portatif selon l'une des revendications 10 à 13,
**caractérisé en ce que**
la bague en plastique (168) est reliée par complémentarité de forme au composant (24) dans la direction périphérique.

15. Outil portatif selon l'une des revendications 10 à 14,
**caractérisé en ce que**
le composant (24) est une boîte à engrenages.

16. Outil portatif selon l'une des revendications 10 à 15,
**caractérisé en ce que**
le palier (32) de l'arbre d'entraînement (14) est inséré dans un évidement en forme de coupelle (34) dans la boîte à engrenages (24).

17. Outil portatif selon la revendication 15 ou 16,
**caractérisé en ce que**
la boîte à engrenages (24) est en métal.

18. Outil portatif selon l'une des revendications 15 à 17,
**caractérisé en ce que**
la boîte à engrenages (24) forme dans la région antérieure (26) au moins une partie du boîtier (10).

19. Outil portatif selon l'une des revendications 10 à 18,
**caractérisé en ce que**
le palier (32) de l'arbre d'entraînement (14) est fixé par une partie de boîtier (40) au moins dans une direction axiale (172).
